# FASCICULE DE BREVET EUROPEEN

(11) **EP 0 694 441 B1**
(45) Date de publication et mention de la délivrance du brevet: **23.08.2000**
(21) Numéro de dépôt: 95401484.1
(22) Date de dépôt: 22.06.1995
(51) Int. Cl.: B60R 9/058

(54) **Dispositif de support de charge formant notamment galerie portebagages pour toit de véhicule automobile**
Lastenträger, insbesondere Dachgepäckträger für Kraftfahrzeuge
Load carrying device, in particular roof rack for an automotive vehicle

(30) Priorité: 27.07.1994 FR 9409313
(43) Date de publication de la demande: 31.01.1996
(73) Titulaire: AUTOMOBILES PEUGEOT, 75116 Paris (FR); AUTOMOBILES CITROEN, 92200 Neuilly-sur-Seine (FR)
(72) Inventeur: Stemmler, Urs, F-92100 Boulogne (FR)
(74) Mandataire: Durand, Yves Armand Louis

(56) Documents cités:
- DE-A- 4 223 899
- DE-U- 8 633 382
- DE-U- 8 811 874
- FR-A- 1 425 508
- US-A- 4 673 119
- US-A- 5 071 050
- US-A- 5 201 911
- PATENT ABSTRACTS OF JAPAN vol. 12, no. 495 (M-780) 23 Décembre 1988 & JP-A-63 215 444 (MAZDA MOTOR CORP.) 7 Septembre 1988

## Description

La présente invention concerne un dispositif de support de charge, formant notamment galerie porte-bagages pour toit de véhicule automobile.

On connaît déjà un tel dispositif comprenant par exemple deux barres tubulaires transversales sur les extrémités desquelles sont montés coulissants deux pieds qui sont susceptibles de s'accrocher par leur base sur deux bords opposés d'un toit de véhicule automobile, et des moyens assurant la fixation et le réglage de la position relative entre les pieds, les extrémités de la barre, et le toit du véhicule.

On connaît des moyens de réglage de la position relative entre les pieds et les extrémités des barres transversales, permettant d'adapter un même dispositif de support de charge à des véhicules ayant différentes largeurs de toit ou une largeur de toit variable le long de la direction longitudinale du véhicule.

Dans certains dispositifs, l'ancrage de ces derniers sur le toit d'un véhicule automobile s'effectue à l'aide de vis qui sollicitent les barres transversales vers leurs pieds d'extrémité par l'intermédiaire de moyens élastiques, ce qui présente comme inconvénient le risque que toute la galerie porte-bagages se dégage du toit du véhicule si les vis précitées ne sont pas bien serrées ou si elles se desserrent, par exemple à la suite de vibrations, et ceci peut être très dangereux pour les tiers lorsque le véhicule est en mouvement.

En outre, dans certaines galeries porte-bagages, les vis de serrage sont visibles et facilement accessibles aux personnes qui passent à proximité du véhicule et de telles galeries porte-bagages peuvent donc être facilement dérobées par des voleurs lorsque le véhicule est à l'arrêt.

FR-A-1 425 508 décrit un dispositif de support de charge formant galerie porte-bagages pour toit de véhicule automobile comprenant les caractéristiques énoncées dans le préambule de la revendication 1.

Cependant, les moyens d'accrochage de ce dispositif connu au toit du véhicule sont constitués par des boulons moletés permettant chacun de serrer un crochet sous la face inférieure de la gouttière latérale du toit du véhicule dans laquelle est disposée l'extrémité de la patte correspondante de fixation de la barre transversale au toit. Cette solution connue a pour inconvénient majeur de déformer le crochet lors d'un serrage trop énergique du boulon moleté. En outre, la présence des boulons moletés à l'extérieur des gouttières latérales occasionne des risques d'accrochage de parties de vêtement d'un usager, telles que par exemple des manches de chemise, voir même de blesser l'usager.

La présente invention a donc pour but de proposer un dispositif de support de charge qui élimine les inconvénients précités, qui soit facilement montable et démontable sur un toit de véhicule automobile, qui assure une fixation simple et rapide de la barre sur ses pieds d'extrémité et qui assure une bonne protection contre le vol.

A cet effet, la présente invention a pour objet un dispositif de support de charge, formant notamment galerie porte-bagages pour toit de véhicule automobile, comprenant au moins une barre allongée, deux pieds d'extrémité susceptibles de s'accrocher à leur base sur deux bords opposés d'un toit de véhicule automobile, au moins l'un des pieds étant monté coulissant sur une extrémité de la barre, et des moyens assurant la fixation et le réglage de la position relative entre les pieds, les extrémités de la barre et le toit du véhicule, lesdits moyens de réglage de position comprenant une lumière oblongue formant boutonnière réalisée dans au moins une paroi de la barre, au voisinage d'au moins une extrémité de celle-ci, ladite extrémité ajourée de la barre venant se fixer dans un logement prévu dans le pied coulissant et les moyens de fixation comprenant au moins une vis ou analogue traversant ladite lumière oblongue et venant se loger dans le pied coulissant pour plaquer ladite extrémité ajourée sur celui-ci, caractérisé en ce que la barre allongée est tubulaire et son extrémité ajourée s'emmanche dans le logement du pied coulissant et en ce que les moyens d'accrochage du dispositif au toit du véhicule sont formés d'un écrou mobile qui coulisse dans une mortaise longitudinale en queue d'aronde d'un rail de bord de toit et d'au moins une vis dont la tête prend appui sur le pied coulissant, ladite vis traversant la base du pied coulissant pour venir se visser dans l'écrou mobile.

Selon un premier mode de réalisation de l'invention, l'extrémité ajourée de la barre tubulaire est au moins en partie aplatie et présente une double épaisseur de tôle à travers laquelle la boutonnière précitée est réalisée, ladite extrémité aplatie de la barre étant reçue dans le logement précité qui est ouvert vers le haut pour permettre l'introduction de la ou des vis de fixation précitées.

Le dispositif de l'invention peut comprendre avantageusement un cache de protection muni d'une serrure servant à verrouiller ce dernier sur la face externe du pied coulissant et permettant l'accès ou non aux moyens de fixation et de réglage de position précités qui sont obturés par le cache, un évidement étant prévu dans chaque pied coulissant pour recevoir ladite serrure.

Dans une variante de réalisation, le dispositif de l'invention comporte un cache de protection muni d'un doigt cranté en saillie sensiblement perpendiculairement du plan du cache et servant à accrocher ce dernier sur la face externe du pied coulissant, pour venir obturer l'accès aux moyens de fixation et de réglage de position précités, ledit doigt cranté traversant le pied coulissant pour venir s'accrocher sur un épaulement prévu dans la face interne du pied coulissant, à savoir la face opposée à celle qui reçoit le cache.

On peut prévoir dans la face externe du pied coulissant, un logement ménagé légèrement en retrait de sa surface externe pour recevoir le cache précité de forme complémentaire.

Selon un autre mode de réalisation de l'invention, la boutonnière précitée est réalisée dans la paroi inférieure de la barre, une ouverture est pratiquée dans la paroi supérieure de la barre au droit de cette boutonnière pour permettre l'introduction de la ou des vis de fixation, et le logement précité du pied coulissant est ouvert vers le haut pour permettre l'introduction de la ou des vis de fixation précitées et présente en section transversale une forme générale en C pour retenir la barre dans le pied coulissant.

Selon une autre caractéristique de l'invention, au moins l'une des vis de fixation précitées traverse le pied coulissant sur toute sa hauteur et vient se visser dans un moyen d'accrochage au toit du véhicule.

Selon encore une autre caractéristique de l'invention, l'extrémité ajourée de la barre est ouverte en bout et communique avec l'ouverture précitée et le dispositif comprend un cache de protection qui est apte à être inséré dans la barre à partir de son extrémité ouverte pour venir obturer l'ouverture et l'extrémité ouverte précitées et interdire l'accès aux vis de fixation et à la boutonnière précitées.

L'invention sera mieux comprise et d'autres buts, caractéristiques, détails et avantages de celle-ci apparaîtront plus clairement au cours de la description explicative qui va suivre de deux modes de réalisation particuliers, actuellement préférés de l'invention, donnés uniquement à titre d'exemple illustratif et non limitatif, en référence aux dessins schématiques annexés, dans lesquels :

La figure 1 est une vue partielle, éclatée et en perspective d'un premier mode de réalisation du dispositif de l'invention.

La figure 2 est une vue partielle et en coupe longitudinale du dispositif de la figure 1, en position assemblée.

La figure 3 est une vue partielle et en coupe longitudinale du dispositif de la figure 1, en position assemblée et montée sur un rail de bord de toit de véhicule automobile, mais comportant une variante de réalisation du cache de protection.

La figure 4 est une vue partielle et en perspective d'un second mode de réalisation du dispositif de l'invention, en position assemblée et montée sur un rail de bord de toit de véhicule automobile.

La figure 5 est une vue partielle, éclatée et en perspective du dispositif de la figure 4.

La figure 6 est une vue partielle et en coupe longitudinale du dispositif de la figure 4.

La figure 7 est une vue en coupe suivant la ligne VII-VII de la figure 6.

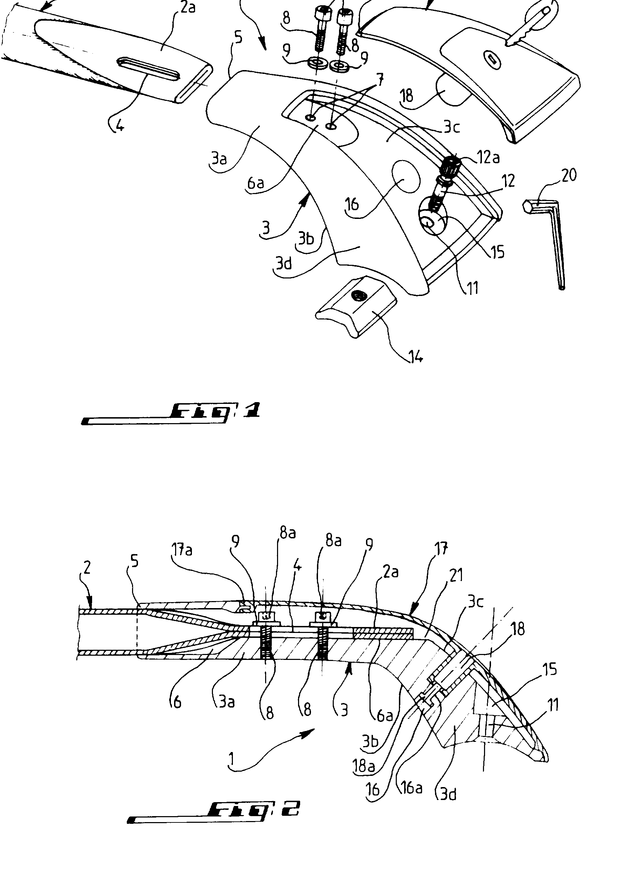

Suivant l'exemple de réalisation représenté sur la figure 1, le dispositif 1 de l'invention comprend au moins une barre transversale allongée tubulaire 2, par exemple deux barres, et deux pieds en forme de crosse 3 montés sur les extrémités longitudinales 2a de chaque barre 2.

Au moins une extrémité 2a de la barre 2 est aplatie, par exemple par écrasement sous une presse (non représentée), de sorte que l'extrémité longitudinale 2a forme une paroi à double épaisseur, à travers laquelle est pratiquée une lumière oblongue 4.

On peut prévoir en variante que les deux extrémités de la barre sont aplaties et équipées d'un pied coulissant ou que seule l'une des extrémités de la barre est aplatie, l'autre extrémité étant solidaire d'un pied non réglable.

Chaque pied 3 en forme de crosse présente en sa partie supérieure 3a une extrémité ouverte 5 dirigée vers la barre 2.

Le pied 3 comporte en outre en sa partie supérieure 3a un logement interne 6 qui débouche au niveau de l'extrémité ouverte 5 pour recevoir l'extrémité longitudinale aplatie 2a de la barre 2.

Le logement 6 définit un épaulement 6a sur lequel prend appui la partie plane de l'extrémité longitudinale 2a de la barre.

La partie aplatie 2a de la barre 2 pénètre entièrement dans le pied 3, jusqu'à ce que l'on atteigne une partie tubulaire sensiblement non déformée de la barre.

Au moins un taraudage, par exemple deux taraudages 7, sont pratiqués à partir de l'épaulement 6a dans le pied 3 et disposés de manière-que la lumière oblongue précitée 4 coïncide avec les taraudages 7 lorsque l'extrémité aplatie 2a est engagée dans le pied 3.

Deux vis 8 et leurs rondelles d'appui associées 9 sont prévues pour solidariser l'extrémité aplatie 2a avec le pied 3 en passant à travers la lumière 4 et en se vissant dans les taraudages 7, la tête 8a des vis 8 prenant appui contre la face supérieure de l'extrémité aplatie 2a de la barre 2.

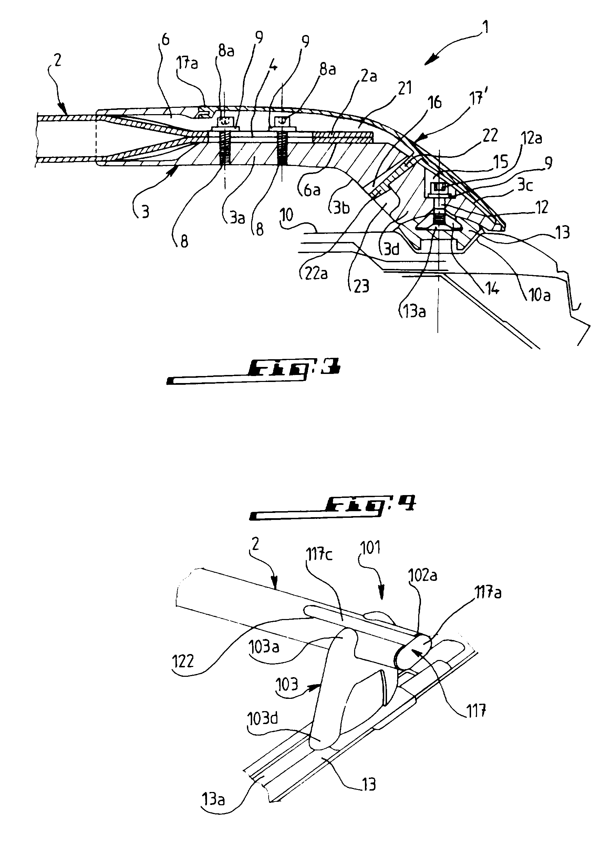

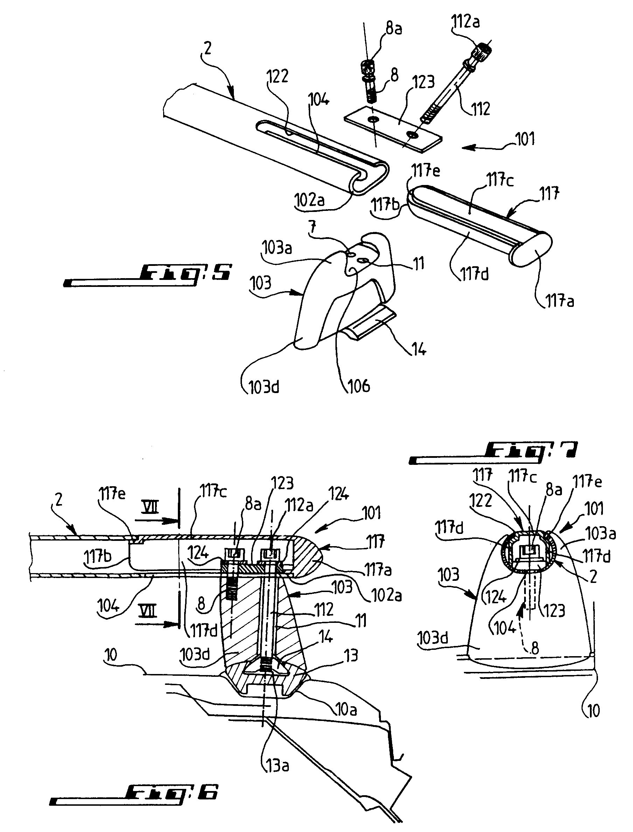

Chaque pied 3 comporte une face dite interne 3b et une face dite externe 3c qui correspondent respectivement à la face orientée vers le toit 10 d'un véhicule automobile (voir figure 3) et à la face visible par les personnes situées à côté du véhicule, lorsque le dispositif 1 de l'invention est monté sur le toit d'un véhicule automobile.

En partant de l'extrémité ouverte 5, le logement interne 6 se prolonge par son épaulement 6a et débouche sur la face externe 3c.

Un alésage 11 est ménagé verticalement à partir de la face externe 3c et à travers la base 3d du pied 3 pour recevoir une vis 12 de fixation du pied 3 sur un rail 13 de bord 10a de toit 10 de véhicule automobile (voir figure 3).

La vis 12 vient se visser dans un écrou 14 mobile longitudinalement dans une mortaise en queue d'aronde 13a de forme correspondante à l'écrou 14 pour le retenir et le guider le long du rail 13.

La tête 12a de la vis 12 prend appui sur un lamage 15 usiné à partir de la face externe 3c autour de l'alésage 11 et la vis 12 vient bloquer le pied 3 sur le rail 13 par vissage dans l'écrou mobile 14.

Le pied 3 présente dans sa partie médiane, entre l'alésage 11 et l'épaulement 6a, un évidement 16 ménagé à partir de la face externe 3c pour recevoir un moyen de verrouillage d'un cache 17 destiné à venir obturer l'accès aux vis de fixation 8 et 12 précitées.

Le cache de protection 17 vient s'adapter dans un logement complémentaire ménagé légèrement en retrait dans le pied 3 au niveau de sa face externe 3c.

Le cache 17 comporte un bord périphérique 17a qui est destiné à coopérer avec le logement précité pour assurer une bonne fermeture de celui-ci.

Le cache 17 s'étend depuis la base 3d du pied 3 et couvre l'épaulement horizontal 6a qui est ouvert vers le haut pour permettre l'assemblage des vis 8 à travers l'extrémité 2a de la barre et dans la partie supérieure 3a du pied 3.

Sur les figures 1 et 2, le moyen de verrouillage est formé d'une serrure 18 qui est reçue dans l'évidement 16 précité et dont le pêne 18a coopère avec un étranglement 16a formé à l'intérieur de l'évidement 16.

Une clé 19 vient verrouiller ou déverrouiller la serrure 18 à l'intérieur du pied 3 pour interdire ou permettre l'accès aux vis 8 et 12 précitées.

On a représenté sur la figure 1 une clé hexagonale 20 destinée à visser et à dévisser les têtes 8a et 12a à six pans creuses des vis 8 et 12.

Bien entendu, la présente invention n'est pas limitée à l'utilisation de vis à tête à six pans creuse et on peut les remplacer par tout autre moyen de fixation adapté.

En position verrouillée sur la face externe 3c, le cache de protection 17 s'écarte de ladite face externe 3c d'un espace 21.

On a représenté sur la figure 3 une variante de réalisation du cache de protection 17', dont le moyen de verrouillage-est constitué d'un doigt cranté 22 dont la dent 22a vient s'accrocher sur un épaulement interne défini entre l'évidement 16 précité et un logement 23 formé à partir de la face interne 3b du pied 3.

En position verrouillée, le doigt cranté 22 est entièrement logé dans le pied 3, de sorte que le doigt cranté 22 est invisible pour une personne située à côté du véhicule.

Dans la figure 3, on a intercalé une rondelle d'appui 9 entre la tête 12a de la vis 12 et le fond du lamage 15.

Le rail 13 qui est représenté sur la figure 3 est fixé dans une rainure latérale 10a du toit 10 du véhicule par des moyens d'accrochage classiques non représentés ici.

On va maintenant rapidement décrire le fonctionnement du dispositif 1 de l'invention en référence aux figures 1 à 3.

On monte d'abord une barre 2, par ses extrémités longitudinales 2a, dans le logement interne 6 de chaque pied 3 et l'on positionne les pieds 3 sur les rails 13 du toit 10 du véhicule en faisant coulisser les extrémités de la barre 2 à l'intérieur des pieds 3.

On vient fixer ensuite les pieds 3 sur les rails 13 au moyen de la vis 12 qui vient se visser dans l'écrou mobile 14 retenu dans la mortaise en queue d'aronde 13a du rail 13 associé.

On déplace alors longitudinalement les pieds 3 le long des rails 13, le guidage longitudinal étant assuré par les écrous mobiles 14.

Si la largeur du toit du véhicule n'est pas constante, ce déplacement engendre un réglage à la fois transversal et longitudinal du dispositif, par coulissement respectivement de la barre 2 dans le logement 6 et de l'écrou 14 dans la mortaise 13a.

Lorsque la position souhaitée est atteinte, on immobilise alors le dispositif 1 en serrant la vis 12 et en vissant les vis 8 à travers la lumière 4 et dans le pied 3.

On coiffe enfin la face externe 3c du pied 3 avec le cache de protection 17 pour obturer l'accès aux vis 8 et 12.

Nous allons maintenant décrire un second mode de réalisation du dispositif 101 de l'invention représenté sur les figures 4 à 7.

Dans le dispositif 101, la barre 2 comporte à ses extrémités une lumière oblongue 104 ménagée à travers sa paroi inférieure et une ouverture allongée 122 ménagée dans la paroi supérieure de la barre 2 au droit de la lumière oblongue 104 et qui débouche au niveau de l'extrémité ouverte libre 102a de la barre 2.

Chaque pied 103 du dispositif 101 présente une forme générale en aileron, dans la partie supérieure 103a duquel est ménagé un logement horizontal traversant 106 de section transversale en forme de C et ouvert vers le haut pour permettre l'introduction des vis de fixation 8 et 112.

Le logement 106 reçoit de manière coulissante l'extrémité 102a de la barre 2 et la retient sur le pied 103 par l'intermédiaire des extrémités recourbées du logement 106 en forme de C.

Lorsque la barre 2 est montée dans le pied 103, une première vis 8 vient prendre appui par sa tête 8a contre la paroi interne inférieure de la barre 2 et passe à travers la lumière 104 pour venir se loger dans un taraudage borgne 7 ménagé dans le pied 103 à partir de la surface horizontale du logement 106.

Une deuxième vis 112 vient prendre appui par sa tête 112a contre la paroi interne inférieure de la barre 2 et passe à travers la lumière 104 et un alésage vertical 11 pratiqué à travers toute la hauteur du pied 103 pour venir se visser dans l'écrou en queue d'aronde 14 précité.

La vis 112 a donc ici pour fonction d'assurer à la fois la fixation de la barre 2 sur le pied 103 et l'accrochage du pied 103 sur le rail 13.

Bien entendu, on pourrait supprimer en variante la vis 8 dans le dispositif 101.

Une plaque d'appui 123, ainsi que des rondelles d'appui 124 sont prévues entre la paroi inférieure de la barre 2 et les têtes 8a et 112a des vis 8 et 112 pour éviter de détériorer la paroi inférieure de la barre 2 lors du serrage de ces vis.

On voit sur les figures 3 et 6 que la base 3d et 103d du pied 3 et 103 présente une portée sphérique concave qui coopère avec une portée sphérique convexe prévue sur le sommet du rail 13, pour ajuster l'inclinaison des vis 12 et 112 respectivement, en fonction des différences dimensionnelles des toits des véhicules automobiles.

Lorsque la barre 2 est montée dans le pied 103, on met en place un cache de protection 117 pour interdire l'accès aux vis 8 et 112.

Le cache de protection 117 est un profilé allongé creux de section transversale en forme de U, l'une 117a de ses extrémités longitudinales étant fermée alors que l'autre 117b est ouverte.

Le cache de protection 117 se présente sous la forme d'un capuchon comportant une paroi supérieure 117c à partir de laquelle font saillie vers le bas des parois latérales 117d.

Une bordure périphérique 117e est prévue entre la paroi supérieure 117c et les parois latérales 117d du cache de protection 117 pour venir s'emboîter dans l'ouverture 122 de la barre 2, à partir de l'extrémité ouverte 102a.

La paroi supérieure 117c du cache de protection 117 présente une forme complémentaire de l'ouverture 122 et vient coiffer avec les parois latérales 117d la plaque d'appui 123 et les têtes de vis 8a et 112a.

L'extrémité fermée 117a du cache de protection 117 vient obturer l'extrémité ouverte 102a de la barre 2.

Le cache 117 est engagé à force dans la barre 2 et son maintien à l'intérieur de celle-ci est assuré par le contact frottant entre la bordure périphérique 117e et l'ouverture allongée 122.

De la même manière que pour le mode de réalisation précédent, la lumière 104 sert au réglage de la longueur utile de la barre 2 sur le toit 10 du véhicule et le cache de protection 117 est installé lorsque l'on a terminé l'assemblage du dispositif 101 de l'invention.

## Revendications

1. Dispositif (1, 101) de support de charge, formant notamment galerie porte-bagages pour toit (10) de véhicule automobile, comprenant au moins une barre allongée (2), deux pieds d'extrémité susceptibles de s'accrocher à leur base sur deux bords opposés (10a) d'un toit de véhicule automobile, au moins l'un (3, 103) des pieds étant monté coulissant sur une extrémité (2a, 102a) de la barre (2), et des moyens (8, 4, 104 ; 14, 12, 112) assurant la fixation et le réglage de la position relative entre les pieds, les extrémités de la barre et le toit du véhicule, lesdits moyens de réglage de position comprenant une lumière oblongue formant boutonnière (4, 104) réalisée dans au moins une paroi de la barre (2), au voisinage d'au moins une extrémité (2a, 102a) de celle-ci, ladite extrémité ajourée de la barre venant se fixer dans un logement (6, 106) prévu dans le pied coulissant (3, 103) et les moyens de fixation comprenant au moins une vis (8, 112) ou analogue traversant ladite lumière oblongue et venant se loger dans le pied coulissant pour plaquer ladite extrémité ajourée sur celui-ci, caractérisé en ce que la barre allongée (2) est tubulaire et son extrémité ajourée s'emmanche dans le logement (6, 106) du pied coulissant (3, 103) et en ce que les moyens d'accrochage du dispositif (1, 101) au toit (10) du véhicule sont formés d'un écrou mobile (14) qui coulisse dans une mortaise longitudinale en queue d'aronde (13a) d'un rail (13) de bord (10a) de toit (10) et d'au moins une vis (12, 112) dont la tête (12a, 112a) prend appui sur le pied coulissant (3, 103), ladite vis traversant la base (3d, 103d) du pied coulissant pour venir se visser dans l'écrou mobile (14).

2. Dispositif selon la revendication 1, caractérisé en ce que l'extrémité ajourée (2a) de la barre tubulaire (2) est au moins en partie aplatie et présente une double épaisseur de tôle à travers laquelle la boutonnière précitée (4) est réalisée, ladite extrémité aplatie de la barre étant reçue dans le logement précité (6) qui est ouvert vers le haut pour permettre l'introduction de la ou des vis de fixation (8) précitées.

3. Dispositif selon la revendication 1 ou 2, caractérisé en ce qu'il comprend un cache de protection (17) muni d'une serrure (18) servant à verrouiller ce dernier sur la face externe (3c) du pied coulissant (3) et permettant l'accès ou non aux moyens de fixation et de réglage de position précités qui sont obturés par le cache, un évidement (16) étant prévu dans chaque pied coulissant pour recevoir ladite serrure.

4. Dispositif selon la revendication 1 ou 2, caractérisé en ce qu'il comporte un cache de protection (17') muni d'un doigt cranté (22) en saillie sensiblement perpendiculairement du plan du cache et servant à accrocher ce dernier sur la face externe (3c) du pied coulissant (3), pour venir obturer l'accès aux moyens de fixation et de réglage de position précités, ledit doigt cranté (22) traversant le pied coulissant pour venir s'accrocher sur un épaulement (23) prévu dans la face interne (3b) du pied coulissant.

5. Dispositif selon la revendication 3 ou 4, caractérisé en ce qu'il comprend, dans la face externe (3c) du pied coulissant (3), un logement ménagé légèrement en retrait de sa surface externe pour recevoir le cache précité (17, 17') de forme complémentaire.

6. Dispositif selon la revendication 1, caractérisé en ce que la boutonnière précitée (104) est réalisée dans la paroi inférieure de la barre (2), une ouverture (122) étant pratiquée dans la paroi supérieure de la barre au droit de cette boutonnière pour permettre l'introduction de la ou des vis de fixation (8, 112), et en ce que le logement précité (106) du pied coulissant (103) est ouvert vers le haut pour permettre l'introduction de la ou des vis de fixation précitées (8, 112) et présente en section transversale une forme générale en C pour retenir la barre (2) dans le pied coulissant (103).

7. Dispositif selon la revendication 6, caractérisé en ce que l'extrémité ajourée (102a) de la barre (2) est ouverte en bout et communique avec l'ouverture précitée (122) et en ce que le dispositif (101) comprend un cache de protection (117) qui est apte à être inséré dans la barre à partir de son extrémité ouverte (102a) pour venir obturer l'ouverture (122) et l'extrémité ouverte (102a) précitées et interdire l'accès aux vis de fixation (8, 112) et à la boutonnière (104) précitées.

8. Dispositif selon la revendication 7, caractérisé en ce que le cache de protection (117) est un profilé creux sensiblement parallélèpipédique et ouvert à l'une (117b) de ses extrémités et à sa base pour recevoir à l'intérieur de celui-ci la tête (8a, 112a) de la ou des vis de fixation (8, 112) lorsque le cache (117) est monté dans la barre (2).

9. Dispositif selon l'une quelconque des revendications précédentes, caractérisé en ce qu'au moins l'une (112) des vis de fixation précitées traverse le pied coulissant (103) sur toute sa hauteur et vient se visser dans un moyen d'accrochage (13, 14) du pied coulissant (103) au toit (10) du véhicule.

## Patentansprüche

1. Lastenträger (1, 101), insbesondere Dach(10)gepäckträger für Kraftfahrzeuge, umfassend wenigstens eine Längsstange (2), zwei äußere Ständer, die geeignet sind, an ihrer Basis auf zwei gegenüberliegenden Rändern (10a) eines Kraftfahrzeugdaches befestigt zu werden, wobei wenigstens einer (3, 103) der Ständer verschiebbar auf einem äußeren Ende (2a, 102a) der Stange (2) angebracht ist, und Mittel (8, 4, 104; 14, 12, 112) zur Befestigung und Einstellung der verhältnismäßigen Position zwischen den Ständern, den äußeren Enden der Stange und dem Kraftfahrzeugdach, wobei besagte Mittel zur Einstellung der Position eine längliche Öffnung umfassen, die eine längliche Aussparung (4, 104) bildet, die in wenigstens einer Wand der Stange (2) in der Nähe wenigstens eines äußeren Endes (2a, 102a) derselben realisiert ist, wobei besagtes durchbrochenes äußeres Ende der Stange in einer im verschiebbaren Ständer (3, 103) vorgesehenen Aufnahme (6, 106) befestigt ist und die Befestigungsmittel wenigstens eine Schraube (8, 112) oder ähnliches umfassen, die besagte längliche Öffnung durchquert und in dem verschiebbaren Ständer untergebracht ist, um besagtes durchbrochenes äußeres Ende auf demselben zu plattieren, dadurch gekennzeichnet, daß die Längsstange (2) röhrenförmig ist und ihr durchbrochenes äußeres Ende in der Aufnahme (6, 106) des verschiebbaren Ständers (3, 103) angeschaftet ist und daß die Befestigungsmittel der Vorrichtung (1, 101) auf dem Dach (10) des Kraftfahrzeugs aus einer mobilen Mutter (14) gebildet sind, die in einem länglichen Zapfenloch in Schwalbenschwanzform (13a) einer Schiene (13) am Rand (10a) des Daches (10) gleitet, und aus wenigstens einer Schraube (12, 112), deren Kopf (12a, 112a) auf dem verschiebbaren Ständer (3, 103) aufliegt, wobei besagte Schraube die Basis (3d, 103d) des verschiebbaren Ständers durchquert, um in die mobile Mutter (14) eingeschraubt zu werden.

2. Vorrichtung gemäß Anspruch 1, dadurch gekennzeichnet, daß das durchbrochene äußere Ende (2a) der röhrenförmigen Stange (2) wenigstens zum Teil abgeflacht ist und eine doppelte Blechschicht aufweist, durch die die besagte längliche Aussparung (4) realisiert ist, wobei das besagte abgeflachte äußere Ende der Stange in der besagten Aufnahme (6) aufgenommen wird, die nach oben offen ist, um die Einführung der besagten Befestigungsschraube(n) (8) zu erlauben.

3. Vorrichtung gemäß Anspruch 1 oder 2, dadurch gekennzeichnet, daß sie eine Schutzabdeckung (17) umfaßt, die mit einem Schloß (18) versehen ist, das zum Verriegeln demselben auf der Außenseite (3c) des verschiebbaren Ständers (3) dient und den Zugang zu den Befestigungsmitteln und den besagten Mitteln zur Einstellung der Position erlaubt oder verschließt, die durch die Abdeckung verschlossen werden, wobei in jedem verschiebbaren Ständer eine Aussparung (16) zur Aufnahme besagten Schlosses vorgesehen ist.

4. Vorrichtung gemäß Anspruch 1 oder 2, dadurch gekennzeichnet, daß er eine Schutzabdeckung (17') umfaßt, der mit einem formgezahnten Zapfen (22) versehen ist, der deutlich rechtwinklig zur Ebene der Abdeckung vorsteht und dazu dient, diesen letzteren auf der Außenseite (3c) des verschiebbaren Ständers (3) zu befestigen, um den Zugang zu den besagten Mitteln zur Befestigung und zur Einstellung der Position zu verschließen, wobei besagter formgezahnter Zapfen (22) den verschiebbaren Ständer durchquert, um auf einem auf der Innenseite (3b) des verschiebbaren Ständers vorgesehenen Vorsprung (23) befestigt zu werden.

5. Vorrichtung gemäß Anspruch 3 oder 4, dadurch gekennzeichnet, daß er auf der Außenseite (3c) des verschiebbaren Ständers (3) eine Aufnahme umfaßt, die zu ihrer äußeren Oberfläche leicht vertieft angeordnet ist, um die besagte Abdeckung (17, 17') in komplementärer Form aufzunehmen.

6. Vorrichtung gemäß Anspruch 1, dadurch gekennzeichnet, daß besagte längliche Aussparung (104) in der unteren Wand der Stange (2) realisiert ist, wobei eine Öffnung (122) in der oberen Wand der Stange direkt vor dieser länglichen Aussparung praktiziert ist, um die Einführung der Befestigungsschraube(n) (8, 112) zu erlauben, und daß die besagte Aufnahme (106) des verschiebbaren Ständers (103) nach oben offen ist, um die Einführung der besagten Befestigungsschraube(n) (8, 112) zu erlauben und im querliegenden Abschnitt eine allgemeine C-Form aufweist, um die Stange (2) in dem verschiebbaren Ständer (103) zu halten.

7. Vorrichtung gemäß Anspruch 6, dadurch gekennzeichnet, daß das durchbrochene äußere Ende (102a) der Stange (2) am Ende offen ist und mit der besagten Öffnung (122) in Verbindung steht und daß die Vorrichtung (101) eine Schutzabdeckung (117) umfaßt, die geeignet ist, von ihrem offenen äußeren Ende (102a) aus in die Stange eingeführt zu werden, um die Öffnung (122) und das besagte offene äußere Ende (102a) zu verschließen und den Zugang zu den besagten Befestigungsschrauben (8, 112) und der besagten länglichen Aussparung (104) zu verriegeln.

8. Vorrichtung gemäß Anspruch 7, dadurch gekennzeichnet, daß die Schutzabdeckung (117) ein deutlich parallelflaches und an einem (117b) seiner äußeren Enden und an seiner Basis offenes Hohlprofil ist, um innen den Kopf (8a, 112a) der Befestigungsschraube(n) (8, 112) aufzunehmen, wenn die Abdeckung (117) in der Stange (2) angebracht ist.

9. Vorrichtung gemäß einem der vorherigen Ansprüche, dadurch gekennzeichnet, daß wenigstens eine (112) der besagten Befestigungsschrauben den verschiebbaren Ständer (103) auf seiner ganzen Höhe durchquert und in einem Befestigungsmittel (13, 14) des verschiebbaren Ständers (103) auf dem Dach (10) des Kraftfahrzeugs angeschraubt wird.

## Claims

1. Load carrying device (1, 101), that forms in particular a luggage rack for roof (10) of an automotive vehicle, comprising at least one elongated bar (2), two end stanchions able to be hooked at their base on two opposite edges (10a) of an automotive vehicle roof, at least one (3, 103) of the stanchions being slidably mounted on one end (2a, 102a) of the bar (2), and means (8, 4, 104 ; 14, 12, 112) ensuring fixation and adjustment of the relative position between the stanchions, the ends of the bar and the vehicle roof, said position adjustment means comprising an oblong aperture that forms a button hole (4, 104) made in at least one wall of the bar (2), near at least one end (2a, 102a) thereof, said apertured end of the bar coming to be fixed in a housing (6, 106) provided in the sliding stanchion (3, 103) and the fixation means comprising at least one screw (8, 112) or the like crossing through said oblong aperture and coming to be housed in the sliding stanchion for pressing said apertured end thereon, characterized in that the elongated bar (2) is tubular and its apertured end is fitted in the housing (6, 106) of the sliding stanchion (3, 103) and in that the means for hooking the device (1, 101) to the vehicle roof (10) are formed by a movable nut (14) which slides in a dove tailed longitudinal slot (13a) of a rail (13)in one edge (10a) of the roof (10) and by at least one screw (12, 112) the head (12a, 112a) of which comes to bear on the sliding stanchion (3, 103), said screw crossing through the base (3d, 103d) of the sliding stanchion for coming to be screwed in the mobile nut (14).

2. Device according claim 1, characterized in that the apertured end (2a) of the tubular bar (2) is at least in part flattened and has a double iron plate thickness through which said button hole (4) is made, said flattened end of the bar being received in said housing (6) which is opened upwardly for enabling introduction of said fixation screw(s) (8)

3. Device according to claim 1 or 2, characterized in that it comprises a protecting cover (17) provided with a lock (18) used for the locking thereof on the outer face (3c) of the sliding stanchion (3) and enabling or not an access to said fixation and position adjustment means which are sealed by the cover, a recess (16) being provided in each sliding stanchion for receiving said lock.

4. Device according to claim 1 or 2, characterized in that it comprises a protecting cover (17') provided with a notched finger (22) protuding substantially perpendicularly to the plane of the cover and used for the hooking thereof on the outer face (3c) of the sliding stanchion (3), for coming to seal the access to said fixation and position adjustment means, said notched finger (2) crossing through the sliding stanchion for coming to be hooked on a shoulder (23) provided in the inner face (3b) of the sliding stanchion.

5. Device according to claim 3 or 4, characterized in that it comprises, in the outer face (3c) of the sliding stanchion (3), a housing that is provided slightly in recess from its outer surface for receiving said cover (17, 17') of a complementary shape.

6. Device according to claim 1, characterized in that said button hole (104) is made in the lower wall of the bar (2), an opening (122) being made in the upper wall of the bar at an upright position to this button hole for enabling introduction of the fixation screw(s) (8, 112), and in that said housing (106) of the sliding stanchion (103) is opened upwardly for enabling introduction of said fixation screw(s) (8, 112) and has a cross section that is substantially of a C shape for maintaining the bar (2) in the sliding stanchion (103).

7. Device according to claim 6, characterized in that the apertured end (102a) of the bar (2) is opened at the end thereof and communicates with said aperture (122), and in that the device (101) comprises a protecting cover (117) which is able to be inserted into the bar from its opened end (102a) for coming to seal said aperture (122) and opened end (102a) and to forbid acess to said fixation screws (8, 112) and button hole (104).

8. Device according to claim 7, characterized in that the protecting cover (117) is a hollow profile member that is substantially parallelipedic and opened at one (117b) of its ends and at its base for receiving inside of it the head (8a, 112a) of the fixation screw(s) (8, 112) when the cover (117) is mounted in the bar (2).

9. Device according to anyone of the preceding claims, characterized in that at least one (112) of said fixation screws crosses through the sliding stanchion (103) on all its length and comes to be screwed in a means (13, 14) for hooking the sliding stanchion (103) to the vehicle roof (10).
